# EUROPÄISCHE PATENTANMELDUNG

(11) **EP 4 316 867 A1**
(43) Veröffentlichungstag der Anmeldung: **07.02.2024**
(21) Anmeldenummer: 22188951.2
(22) Anmeldetag: 05.08.2022
(51) Int. Cl.: B60B 35/08, F16D 65/12, F16D 65/02

(54) **LEICHTBAUELEMENT**

(71) Anmelder: Gschweitl, Ernst Dipl.-Ing., 8200 Albersdorf-Prebuch (AT)
(72) Erfinder: Gschweitl, Ernst Dipl.-Ing., 8200 Albersdorf-Prebuch (AT)
(74) Vertreter: Weiser & Voith Patentanwälte Partnerschaft

(57) **Zusammenfassung**

Ein Leichtbauelement (9), z.B. für einen Radsatz (1) eines Schienenfahrzeugs, umfasst eine Hohlwelle (3) und eine innengewindete Nabe (8), die auf ein Außengewinde (12) der Hohlwelle (3) geschraubt ist, wobei Hohlwelle (3) und Nabe (8) eine gemeinsame Achse (7) haben, wobei ein innengewindeter Ring (13) vorgesehen ist, der mit Axialabstand (S) zur Nabe (8) auf das Außengewinde (12) geschraubt ist, und wobei Nabe (8) und Ring (13) über rund um die Achse (7) verteilte Schrauben (15) in Axialrichtung (A) verspannt sind.

## Beschreibung

Die vorliegende Erfindung betrifft ein Leichtbauelement, insbesondere für einen Radsatz eines Schienenfahrzeugs, umfassend eine Hohlwelle und eine innengewindete Nabe, die auf ein Außengewinde der Hohlwelle geschraubt ist, wobei Hohlwelle und Nabe eine gemeinsame Achse haben. Die Nabe kann für verschiedene Zwecke verwendet werden, beispielsweise als Nabe einer Antriebs- oder Bremsscheibe.

Im modernen Bahnbau wird zunehmend angestrebt, die Masse von Schienenfahrzeugen zu reduzieren, insbesondere auch die ungefederte Masse ihrer Radsätze, weil diese für den Fahrwegverschleiß besonders relevant ist und daher häufig in die Berechnung der Fahrwegbenützungsgebühren einfließt. Zu diesem Zweck wurden Leichtbau-Radsätze entwickelt, bei denen anstelle von Vollwellen Hohlwellen eingesetzt sind, mit welchen die Masse eines Radsatzes um bis zu 25% reduziert werden kann. Aber auch andere Maschinen, z.B. Schiffsantriebe, können vom Einsatz von Hohlwellen profitieren, um Material und Gewicht einzusparen.

Da zur Gewichtseinsparung die Hohlwelle möglichst dünnwandig sein soll und anderseits der gesamte Radsatz den dynamisch wechselnden Biegemomenten im Betrieb möglichst gut standhalten soll, ist bei der Anbindung der Nabe an die Hohlwelle darauf zu achten, möglichst geringe lokale radiale Kräfte in die Hohlwelle einzuleiten, um deren Einschnürung, wie sie z.B. bei üblichen Presssitzen auftritt, zu verhindern. Im Stand der Technik wird dazu die Wandstärke der Hohlwelle in ihrer Mitte erhöht, um sie dort besser mit der Nabe verpressen zu können. Zur Erhöhung der Wandstärke der Hohlwelle im Nabenverbindungsbereich muss entweder eine dickwandigere Hohlwelle außerhalb dieses Bereichs innen- und/oder außenseitig abgespant werden, was fertigungstechnisch aufwendig ist und einen hohen Materialverschnitt verursacht. Oder es wird im Mittelbereich einer dünnwandig gefertigten Hohlwelle ein verdickter Mittelabschnitt bzw. Flansch eingeschweißt, was zwei zusätzliche Schwachstellen darstellt, die die Lebensdauer des Radsatzes signifikant beeinträchtigen.

Die Erfindung setzt sich zum Ziel, ein verbessertes Leichtbauelement für Radsätze von Schienenfahrzeugen bereitzustellen, welches einfach herzustellen ist und eine lange Lebensdauer des Radsatzes gewährleistet.

Diese Ziel wird mit einem Leichtbauelement der einleitend genannten Art erreicht, das sich erfindungsgemäß durch einen innengewindeten Ring auszeichnet, der mit Axialabstand zur Nabe auf das Außengewinde der Hohlwelle geschraubt ist, wobei Nabe und Ring über rund um die Achse verteilte Schrauben in Axialrichtung verspannt sind.

Erfindungsgemäß wird die Hohlwelle mit der Nabe über einen auf die Hohlwelle aufgeschraubten Ring verbunden. Dadurch kann eine gesonderte Verstärkung des Nabenbereichs der Hohlwelle, sei es durch Abspanen außerhalb dieses Bereichs oder Einschweißen von Verdickungen oder Flanschen im Nabenbereich, entfallen und die Hohlwelle mit weitgehend konstanter Wandstärke und damit besonders einfach hergestellt werden. Durch Festziehen der Schrauben werden sowohl der innengewindete Ring als auch die innengewindete Nabe auf dem Außengewinde der Hohlwelle festgesetzt. Wenn Zugschrauben verwendet werden, welche die Nabe und den Ring in Axialrichtung gegeneinander ziehen, wird der Axialabstand zwar geringfügig verkleinert, es bleibt aber ein Spalt bestehen, damit sich Nabe und Ring auf dem Außengewinde der Hohlwelle beim Anziehen der Schrauben festsetzen können. Wenn Schrauben verwendet werden, die die Nabe und den Ring in Axialrichtung auseinandertreiben, wird der Axialabstand geringfügig vergrößert, wenn Nabe und Ring sich in den umgekehrten Axialrichtungen auf dem Außengewinde der Hohlwelle festsetzen. In beiden Fällen ergibt sich eine ausgezeichnete drehfeste Verbindung der Nabe mit der Hohlwelle, ohne dass letzere hohen lokalen radialen Kräften unterworfen ist. Eine Verdickung der Hohlwelle im Nabenbereich erübrigt sich damit.

Die Schrauben können an sich beliebiger Art sein, z.B. Gewindestangen, die sowohl Nabe als auch Ring durchsetzen und über Muttern an ihren Enden festgezogen werden. Besonders günstig ist es, wenn jede Schraube einen der beiden Teile Nabe und Ring durchsetzt, mit einem Kopf oder Umfangsabsatz an diesem Teil anliegt und in eine Gewindebohrung des anderen der beiden Teile eingeschraubt ist. Die Schraubenköpfe sind dadurch besonders einfach von außen für die Montage zugänglich.

Die Schrauben können z.B. in Gruppen symmetrisch um die Achse angeordnet sein, z.B. auch schräg zur Achse. In einer bevorzugten Ausführungsform sind die Schrauben axialparallel und regelmäßig um die Achse verteilt. Dies ergibt eine besonders homogene Kräfteverteilung um die gemeinsame Achse.

An sich können beliebig viele Schrauben verwendet werden. Günstig ist es, wenn 8 bis 48, bevorzugt 12 bis 36, besonders bevorzugt 16 bis 24, Schrauben vorgesehen sind. Die Verwendung vieler kleindurchmessriger Schrauben reduziert die über den Umlauf der Hohlwelle bzw. Nabe auftretende Variation von lokalen Kräften und Momenten, welche auf die Schrauben wirken, und damit die Belastung und den Verschleiß des Leichtbauelements.

Die Erfindung wird nachfolgend anhand eines in den beigeschlossenen Zeichnungen dargestellten Beispiels näher erläutert. In den Zeichnungen zeigt:
Fig. 1 die Verwendung eines erfindungsgemäßen Leichtbauelements in einem Leichtbau-Radsatz in einer Seitenansicht;
die Fig. 2 und 3 das Leichtbauelement von Fig. 1 in einer Stirnansicht bzw. im Schnitt; und
Fig. 4 das Detail IV von Fig. 3 in größerem Maßstab.

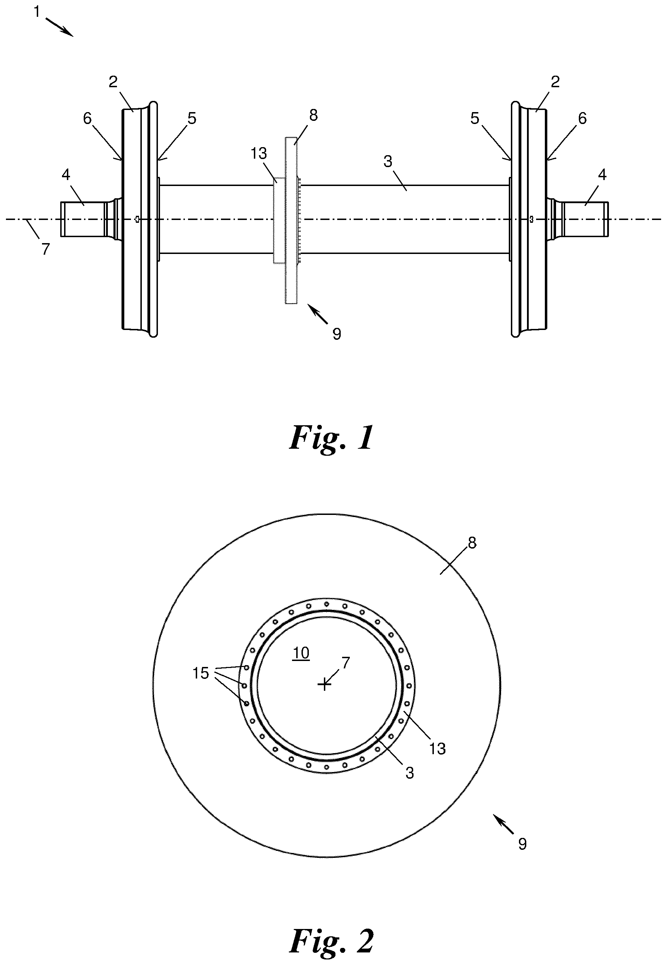

In Fig. 1 ist ein Leichtbau-Radsatz 1, z.B für ein Schienenfahrzeug wie einen Zug oder Güterwaggon, dargestellt. Der Radsatz 1 hat zwei Räder 2, eine Hohlwelle 3 und zwei Achsstummel 4 zur Lagerung in entsprechenden radaußenseitigen Lagern (nicht gezeigt) des Schienenfahrzeugs. Die Räder 2 sind an ihren Innenseiten 5 über die Hohlwelle 3 miteinander verbunden und tragen jeweils auf ihrer der Hohlwelle 3 abgewandten (Außen-)Seite 6 einen der Achsstummel 4. Die Räder 2, die Hohlwelle 3 und die Achsstummel 4 haben eine gemeinsame zentrale Achse 7. Die Hohlwelle 3 kann von einem Motor angetrieben sein, der Radsatz 1 also einen Treibradsatz bilden, oder antriebslos sein, der Radsatz 1 also einen Laufradsatz bilden.

Zum Anschließen eines Motors bzw. einer Antriebsscheibe oder einer Bremse bzw. Bremsscheibe an die Hohlwelle 3 sitzt auf der Hohlwelle 3 eine Nabe 8. An die Nabe 8 kann eine Antriebs- oder Bremsscheibe (nicht gezeigt) angeflanscht oder angeschweißt werden oder die Nabe 8 ist selbst als Antriebs- oder Bremsscheibe ausgebildet.

Die Hohlwelle 3 zusammen mit der darauf sitzenden Nabe 8 bildet ein Leichtbauelement 9, das als Halbzeug bzw. Halbfertigteil für den Aufbau des Leichtbau-Radsatzes 1 dienen kann, beispielsweise durch anschließendes Verbinden mit den Rädern 2 und Achsstummeln 4. Im zusammengebauten Zustand des Leichtbau-Radsatzes 1 stellt die Baugruppe aus Hohlwelle 3 und darauf sitzender Nabe 8, also das Leichtbauelement 9, jedenfalls einen Bestandteil des Leichtbau-Radsatzes 1 dar.

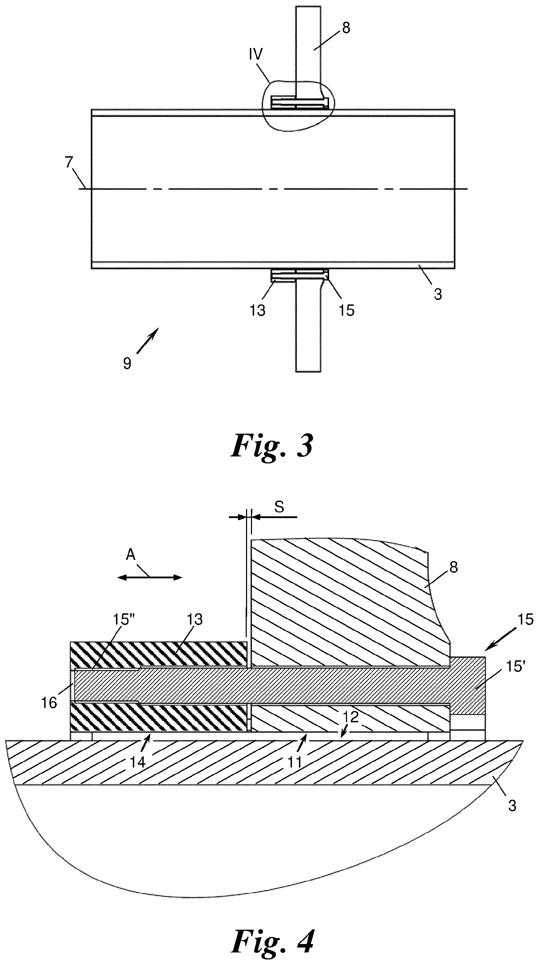

Die Verbindung der Nabe 8 mit der Hohlwelle 3 wird unter Bezugnahme auf die Fig. 2 - 4 im Detail erläutert. Die Nabe 8 ist koaxial zur Achse 7 und hat eine zentrale Öffnung 10 mit einem Innengewinde 11, das auf ein Außengewinde 12 der Hohlwelle 3 aufgeschraubt ist. In einem Axialabstand S zur Nabe 8 ist koaxial zur Achse 7 ein Ring 13 mit einem Innengewinde 14 auf das Außengewinde 12 der Hohlwelle 3 aufgeschraubt. Die Nabe 8 und der Ring 13 sind über einen Satz von rund um die Achse 7 verteilten axialparallelen Schrauben 15 in Axialrichtung A, d.h. parallel zur Achse 7, gegeneinander verspannt. Beispielsweise sind die Schrauben 15 Zugschrauben, welche die Nabe 8 und den Ring 13 in Axialrichtung A durchsetzen und in Richtung zueinander spannen, sodass die Innengewinde 11 und 14 von Nabe 8 und Ring 13 auf dem Außengewinde 12 der Hohlwelle 3 festgesetzt werden. Alternativ könnten die Schrauben 15 Druckschrauben sein, welche die Nabe 8 und den Ring 13 in Axialrichtung A auseinandertreiben, wodurch wiederum deren Innengewinde 11 und 14 auf dem Außengewinde 12 der Hohlwelle 3 festgesetzt werden.

Im Falle von Zugschrauben sind die Schrauben 15 z.B. Kopfschrauben, deren Köpfe 15' an der dem Ring 13 abgewandten Seite der Nabe 8 angreifen und deren Gewindeabschnitte 15" in Gewindebohrungen 16 des Rings 13 eingeschraubt sind. Alternativ könnten die Nabe 8 Gewindebohrungen zum Einschrauben der Gewindeabschnitte 15" aufweisen und die Köpfe 15' an der der Nabe 8 abgewandten Seite des Rings 13 angreifen (nicht gezeigt).

Im Falle von die Nabe 8 und den Ring 13 auseinandertreibenden (Druck-)Schrauben 15 könnten diese beispielsweise in einen der Teile Nabe 8 und Ring 13 eingeschraubt und mit einem Umfangsabsatz an der diesem Teil zugewandten Seite des jeweils anderen Teils von Nabe 8 und Ring 13 angreifen (nicht gezeigt).

In der gezeigten Ausführungsform verlaufen alle Schrauben 15 in Axialrichtung A parallel zur Achse 7 und sind in regelmäßigen Winkelabständen um die Achse 7 verteilt. Optional könnten einige oder alle Schrauben 15 schräg zur Achse 7 verlaufen und/oder unregelmäßig um die Achse 7 verteilt sein.

Grundsätzlich kann eine beliebige Anzahl an Schrauben 15 vorgesehen sein. Eine größere Anzahl kleindurchmessriger Schrauben 15 ergibt eine geringere Schraubenbelastung im Betrieb. Insbesondere können 8 bis 48, bevorzugt 12 bis 36, besonders bevorzugt 16 bis 24, Schrauben 15 vorgesehen werden.

Das Leichtbauelement 9 kann nicht nur für den Aufbau von Leichtbau-Radsätzen 1 verwendet werden sondern grundsätzlich überall dort, wo eine Hohlwelle mit einer darauf sitzenden Nabe drehfest verbunden werden soll, z.B. im Schiffsbau für Schiffsantriebswellen. Unter dem Begriff "Nabe" wird dabei jede Art von Bauteil mit einer Öffnung 10 verstanden, durch die die Hohlwelle 3 hindurchgeführt werden kann.

Die Erfindung ist nicht auf die dargestellten und beschriebenen Ausführungsbeispiele beschränkt, sondern umfasst alle Varianten, Modifikationen und deren Kombinationen, die in den Rahmen der angeschlossenen Ansprüche fallen.

## Patentansprüche

1. Leichtbauelement, insbesondere für einen Radsatz (1) eines Schienenfahrzeugs, umfassend eine Hohlwelle (3) und eine innengewindete Nabe (8), die auf ein Außengewinde (12) der Hohlwelle (3) geschraubt ist, wobei Hohlwelle (3) und Nabe (8) eine gemeinsame Achse (7) haben, **gekennzeichnet durch** einen innengewindeten Ring (13), der mit Axialabstand (S) zur Nabe (8) auf das Außengewinde (12) geschraubt ist, wobei Nabe (8) und Ring (13) über rund um die Achse (7) verteilte axialparallele Schrauben (15) in Axialrichtung (A) verspannt sind.

2. Leichtbauelement nach Anspruch 1, **dadurch gekennzeichnet, dass** jede Schraube (15) einen der beiden Teile Nabe (8) und Ring (13) durchsetzt, mit einem Kopf (15') oder Umfangsabsatz an diesem Teil anliegt und in eine Gewindebohrung (16) des anderen der beiden Teile (8, 13) eingeschraubt ist.

3. Leichtbauelement nach Anspruch 1 oder 2, **dadurch gekennzeichnet, dass** die Schrauben (15) regelmäßig um die Achse (7) verteilt sind.

4. Leichtbauelement nach einem der Ansprüche 1 bis 3, **dadurch gekennzeichnet, dass** 8 bis 48, bevorzugt 12 bis 36, besonders bevorzugt 16 bis 24, Schrauben (15) vorgesehen sind.
